(19) Europäisches Patentamt
European Patent Office
Office européen des brevets

(11) **EP 1 207 491 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.⁷: **G06K 7/12**, G06K 7/10

(21) Anmeldenummer: **01126844.8**

(22) Anmeldetag: **12.11.2001**

(54) **Optoelektronische Vorrichtung**

Optoelectronic device

Dispositif optoélectronique

(84) Benannte Vertragsstaaten:
**CH DE FR GB IT LI NL**

(30) Priorität: **17.11.2000 DE 10056232**

(43) Veröffentlichungstag der Anmeldung:
**22.05.2002 Patentblatt 2002/21**

(73) Patentinhaber: **Leuze electronic GmbH + Co.**
**73277 Owen/Teck (DE)**

(72) Erfinder:
• **Wörner, Jörg**
**73235 Weilheim (DE)**
• **Droemer, Jörg**
**72574 Bad Urach-Wittlingen (DE)**

(74) Vertreter: **Ruckh, Rainer Gerhard, Dr.**
**Fabrikstrasse 18**
**73277 Owen/Teck (DE)**

(56) Entgegenhaltungen:
WO-A-95/19605          DE-A- 19 842 352
DE-A- 19 920 311       US-A- 5 525 798

**Beschreibung**

Die Erfindung betrifft eine optoelektronische Vorrichtung gemäß dem Oberbegriff des Anspruchs 1.

Eine derartige Vorrichtung ist aus der DE 43 37 718 C1 bekannt, welche zur Erfassung von Kontrastmustern aufweisenden Marken, insbesondere Barcodes, dient.

Die von einem Sender emittierten Sendelichtstrahlen werden über die Marken geführt. Die an den Marken reflektierten Empfangslichtstrahlen weisen eine dem Kontrastmuster der jeweiligen Marke entsprechende Amplitudenmodulation auf.

Die durch die Empfangslichtstrahlen am Ausgang des Empfängers anstehenden Empfangssignale werden in einer Auswerteeinheit ausgewertet, die einen n-bit Analog-Digital-Wandler und eine Anordnung von digitalen Filtern aufweist. Der Analog-Digitalwandler, der vorzugsweise eine Wortbreite von 8 bit aufweist, wandelt das analoge Empfangssignal in ein digitalisiertes Empfangssignal. Dieses digitalisierte Empfangssignal wird der Anordnung von digitalen Filtern zugeführt. Die Koeffizienten der digitalen Filter sind derart gewählt, dass durch die digitale Filterung Signalverzerrungen des Empfangssignals, die durch Bauteiltoleranzen der in der optoelektronischen Vorrichtung verwendeten Bauteile verursacht werden, kompensiert werden.

Dadurch kann die Nachweisempfindlichkeit der optoelektronischen Vorrichtung erhöht werden.

Aus der DE 198 42 352 ist eine weitere optoelektronische Vorrichtung zur Detektion von Marken, insbesondere Barcodes, bekannt. Bei dieser Vorrichtung wird ein Sender verwendet, der Sendelichtstrahlen im blauen Wellenlängenbereich emittiert.

Im Vergleich zu optoelektronischen Vorrichtungen, die mit Sendern arbeiten, welche Sendelichtstrahlen im roten oder infraroten Wellenlängenbereich emittieren, erfolgt bei dieser Vorrichtung mit zunehmender Distanz eine langsamere Aufweitung des Strahldurchmessers der Sendelichtstrahlen. Dies hat zur Folge, dass die Sendelichtstrahlen auch in größeren Distanzen zur Vorrichtung noch einen so kleinen Strahldurchmesser aufweisen, dass eine sichere Detektion der Marken gewährleistet ist.

Somit wird durch die Verwendung derartiger Sender ein großer Tiefenschärfebereich, innerhalb dessen Marken erfassbar sind, erhalten.

Der Strichcodeleser BCL 21722 mit integriertem Decoder und Anschlusseinheit MA2', Technische Beschreibung, 1998, Leuze electronic GmbH + Co KG, Owen/Teck, Seiten 1-4, 10-13, 39, stellt eine weitere gattungsgemäße optoelektronische Vorrichtung dar. Die Lesedistanzen dieser Vorrichtung sind auf maximal 450 nm begrenzt. Der Sender emittiert Sendelichtstrahlen mit einer Wellenlänge von 650 nm.

Die DE 199 20 311 A1 betrifft einen Lumineszenztaster zur Detektion von Lumineszenzmarken, mit wenigstens einem Sender zum Aussenden einer elektromagnetischen Sendestrahlung in einen Übergangsbereich, wenigstens einem photoelektrischen Empfängers zum Empfang einer von einer im Überwachungsbereich befindlichen Lumineszenzmarke remittierten elektromagnetischen Empfangsstrahlung, und einer Auswerteschaltung zur Auswertung eines von vom Empfänger abgegebenen Empfangssignals. Der Sender ist zum Aussenden von Sendestrahlung eines nicht sichtbaren Wellenlängenbereichs und der Empfänger zum Empfang von Empfangsstrahlung eines nicht sichtbaren Wellenlängenbereichs ausgebildet.

Der Erfindung liegt die Aufgabe zugrunde, eine optoelektronische Vorrichtung der eingangs genannten Art bereitzustellen, welche bei möglichst geringer Baugröße eine möglichst hohe Leistungsfähigkeit aufweist.

Zur Lösung dieser Aufgabe sind die Merkmale des Anspruchs 1 vorgesehen. Vorteilhafte Ausführungsformen und zweckmäßige Weiterbildungen sind in den Unteransprüchen beschrieben.

Die Erfindung betrifft eine optoelektronische Vorrichtung zum Erkennen von mit definierten Kontrastmustern versehenen Marken mit einem Sendelichtstrahlen emittierenden Sender, einer dem Sender nachgeordneten Sendeoptik, einem Empfangslichtstrahlen empfangenden Empfänger, einer dem Empfänger nachgeordneten Empfangsoptik und einer Auswerteeinheit. Weiterhin ist eine Ablenkeinheit vorgesehen, mittels derer die Sendelichtstrahlenperiodisch innerhalb eines Abtastbereichs abgelenkt und so über die Marken geführtwerden und an diesen reflektiert und als Empfangslichtstrahlen zum Empfänger geführtwerden. Die dabei am Ausgang des Empfängers generierten Empfangssignale werden zum Erkennen der Marken in der Auswerteeinheit ausgewertet. Die maximale Lesedistanz der erfindungsgemäßen optoelektronische Vorrichtung beträgt 1,5 m, wobei die Wellenlängen $\lambda$ der vom Sender emittierten Sendelichtstrahlen im Bereich $350 \, nm \leq \lambda \leq 450 \, nm$ liegen und die Fläche $A_e$ der Empfangsoptik kleiner oder gleich 5 cm$^2$ ist.

Mit einer derart ausgebildeten optoelektronischen Vorrichtung können die Vorteile einer hohen Nachweisempfindlichkeit bei großer Lesedistanz und einer geringen Baugröße kombiniert werden.

Dabei liegt der Erfindung die Erkenntnis zugrunde, dass die Nachweisgrenzen von industriell eingesetzten optoelektronischen Vorrichtungen zur Erkennung von Marken, insbesondere bei großen Abständen der Marken zur Vorrichtung, durch das Speckle-Rauschen bestimmt sind.

Das Speckle-Rauschen wird dadurch hervorgerufen, das die Marken selbst oder die Unterlagen, auf welche die Marken aufgedruckt sind, eine bestimmte Oberflächenrauigkeit aufweisen.

Die auf einer derartigen Oberfläche, insbesondere einer Papieroberfläche auftreffenden Sendelichtstrahlen werden an dieser diffus reflektiert.

Aufgrund der unregelmäßigen, rauen Oberflächenstruktur treten bei den an den Marken reflektierten, als Empfangslichtstrahlen zum Empfänger geführten Sendelichtstrahlen optische Interferenzen auf. Damit werden in der Empfangsebene des Empfängers als fleckenförmige Interferenzmuster sogenannte Speckles erhalten.

Bei der Abtastung einer Marke mittels der optoelektronischen Vorrichtung werden die Sendelichtstrahlen über die Marke geführt. Da die Rauigkeitsstruktur der Oberfläche, auf welcher die Marke aufgebracht ist, nicht homogen sondern statistisch verteilt ist, ändert sich während der Abtastung das Speckle-Muster auf dem Empfänger. Diese zeitliche Variation des Speckle-Musters auf dem Empfänger verursacht das Speckle-Rauschen.

Das Signal-Rauschverhältnis SNR, welches aufgrund des Speckle-Rauschens erhalten wird ist proportional zum Quotienten der Fläche der Empfangsoptik $A_e$ und der mittleren Fläche $<A>$ der Speckles:

$$SNR \sim A_e / <A>$$

Die mittlere Fläche $<A>$ der Speckles wiederum hängt von der Distanz d der Marke zur optoelektronischen Vorrichtung, der Wellenlänge $\lambda$ der Sendelichtstrahlen und der mittleren Wellenlänge $<R>$ der Rauigkeit der Oberfläche gemäß folgender Beziehung ab:

$$<A> \sim d^2 \cdot \lambda^2 / <R>^2$$

Damit ergibt sich folgende Abhängigkeit für das Signal-Rauschverhältnis:

$$SNR \sim A_e / <A> \sim A_e \cdot <R>^2 / (d \cdot \lambda)^2$$

Erfindungsgemäß wird das Speckle-Rauschen bei der optoelektronischen Vorrichtung dadurch vermindert, dass anstelle von üblicherweise im roten oder infraroten Wellenlängenbereich emittierenden Sendern ein Sender verwendet wird, der Sendelichtstrahlen im ultravioletten und/oder blauen Wellenlängenbereich emittiert. Dabei wird erfindungsgemäß ein Sender verwendet, der Sendelichtstrahlen im Bereich $350 \text{ nm} \leq \lambda \leq 450 \text{ nm}$ emittiert.

Die in industriellen Applikationen typischerweise eingesetzten Sender emittieren bei einer Wellenlänge von ca. 660 nm. Wird ein derartiger Sender durch einen Sender ersetzt, der Sendelichtstrahlen bei etwa 400 nm emittiert, so verbessert sich das Rauschverhältnis um einen Faktor von etwa 2,7.

Erfindungsgemäß wird die Verwendung eines im ultravioletten oder blauen Wellenlängenbereich emittierenden Senders mit einer Empfangsoptik kombiniert, deren Fläche kleiner oder gleich 5 cm² ist, wobei die maximale Sendedistanz der optoelektronische Vorrichtung 1,5 m beträgt.

Die Verwendung einer derartig kleinen Empfangsoptik erlaubt eine erhebliche Reduzierung der Baugröße der erfindungsgemäßen optoelektronischen Vorrichtung gegenüber bekannten Vorrichtungen mit vergleichbaren maximalen Lesedistanzen.

Dies beruht darauf, dass die Größe der Empfangsoptik wesentlich die gesamte Baugröße der optoelektronischen Vorrichtung bestimmt. Dies ist besonders dann der Fall, wenn die optoelektronische Vorrichtung eine Ablenkeinheit aufweist, die insbesondere ein rotierendes Polygonspiegelrad aufweist.

Mittels des Polygonspiegelrads werden die Sendelichtstrahlen periodisch innerhalb eines Abtastbereichs geführt. Durch die von den Marken reflektierten Empfangslichtstrahlen werden über das Polygonspiegelrad zum Empfänger geführt.

Damit die Empfangslichtstrahlen vollständig vom Polygonspiegelrad zum Empfänger geführt werden, sind die Größen der Spiegelflächen an die Fläche der Empfangsoptik angepasst, über welche die Empfangslichtstrahlen zum Empfänger geführt sind.

Damit kann das Polygonspiegelrad umso kleiner ausgebildet sein, je kleiner die Empfangsoptik gewählt werden kann. Aufgrund seines relativ großen Volumens bestimmt die Größe des Polygonspiegelrads maßgeblich die Größe der gesamten Vorrichtung, so dass durch eine Reduktion der Fläche der Empfangsoptik die gesamte Baugröße der optoelektronischen Vorrichtung reduziert werden kann.

Dabei wird die geringere Fläche der Empfangsoptik durch die erfindungsgemäße Verwendung des im ultravioletten und/oder blauen Wellenlängenbereichs emittierenden Senders kompensiert oder überkompensiert, so dass gegenüber herkömmlichen optoelektronischen Vorrichtungen, die mit im roten oder infraroten Wellenlängenbereich emittierenden Sendern arbeiten, eine erhebliche Reduktion der Baugröße bei gleicher oder sogar verbesserter Nachweisempfindlichkeit erhalten wird.

Die Erfindung wird im nachstehenden anhand der Zeichnung erläutert. Es zeigt:

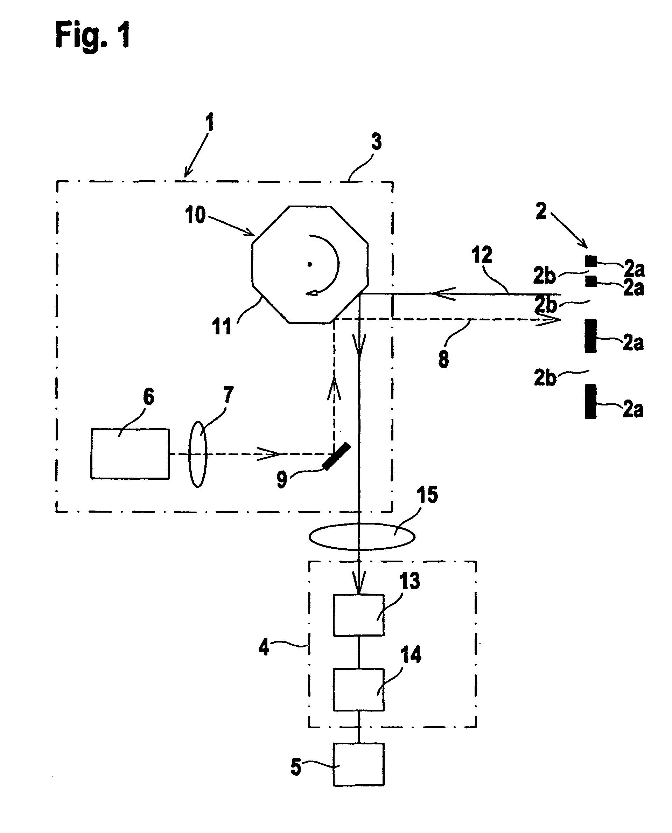

Figur 1:     Schematische Darstellung eines Ausführungsbeispiels der erfindungsgemäßen optoelektronischen Vorrichtung.

In Figur 1 ist der prinzipielle Aufbau eines Ausführungsbeispiels der erfindungsgemäßen optoelektronischen Vorrichtung 1 zum Erkennen von mit definierten Kontrastmustern versehenen Marken dargestellt. Prinzipiell können die Marken beliebige Folgen und Formen von aneinander angrenzenden Hell-Dunkelflächen, vorzugsweise Schwarz-Weiß-Flächen, aufweisen. Im folgenden soll die Erfindung für den Fall erläutert werden, dass die Marken von Barcodes 2 gebildet sind. Die Barcodes 2 bestehen im wesentlichen aus einer alternierenden Folge von hellen und dunklen, vorzugsweise schwarzen und weißen Linienelementen 2a, 2b. Die Linienelemente 2a, 2b weisen jeweils dieselbe Länge auf. Entsprechend der im Barcode 2 kodierten Information weisen die einzelnen Linienelemente 2a, 2b bestimmte Modulbreiten B auf.

Die optoelektronische Vorrichtung 1 besteht im wesentlichen aus einem Sendeelement 3, einem Empfangselement 4 sowie einer Auswerteeinheit 5. Das Sendeelement 3 besteht aus einem Sender 6, sowie aus einer dem Sender 6 nachgeordneten Sendeoptik 7 zur Fokussierung der vom Sender 6 emittierten Sendelichtstrahlen 8. Die fokussierten Sendelichtstrahlen 8 werden über einen Umlenkspiegel 9 auf eine Ablenkeinheit geführt, die im vorliegenden Ausführungsbeispiel von einem motorisch getriebenen, rotierenden Polygonspiegelrad 10 gebildet ist. Das Polygonspiegelrad 10 weist mehrere identische Spiegelflächen 11 auf, an welchen die Sendelichtstrahlen 8 abgelenkt werden. Die Drehachse des Polygonspiegelrads 10 ist senkrecht zur in Figur 1 dargestellten Äquatorialebene des Polygonspiegelrads 10 angeordnet.

Durch die Drehbewegung werden die Sendelichtstrahlen 8 periodisch innerhalb eines Abtastbereichs geführt. Der Abtastbereich verläuft in einer Ebene und erstreckt sich über einen Winkelbereich, der durch die Anzahl der Spiegelflächen 11 des Polygonspiegelrads 10 vorgegeben ist.

Innerhalb des Abtastbereichs liegende Barcodes 2 werden mit den Sendelichtstrahlen 8 periodisch abgetastet. Dabei können die Barcodes 2 innerhalb eines bestimmten Entfernungsbereichs zur optoelektronischen Vorrichtung 1, dem sogenannten Tiefenschärfenbereich, erfasst werden.

Die vom Barcode 2 reflektierten Empfangslichtstrahlen 12 werden über das Polygonspiegelrad 10 zum Empfangselement 4 geführt. Dabei werden die Empfangslichtstrahlen 12 über dieselbe Spiegelfläche 11 des Polygonspiegelrads 10 wie die Sendelichtstrahlen 8 geführt.

Das Empfangselement 4 besteht aus einer Fotodiode 13, in der die Empfangslichtstrahlen 12 in ein analoges elektronisches Empfangssignal gewandelt werden, und einem dieser nachgeschalteten Verstärker 14. Zur Verbesserung der Nachweisempfindlichkeit ist dem Empfangselement 4 eine Empfangsoptik 15 vorgeordnet.

Die am Ausgang des Empfangselements 4 anstehenden Empfangssignale werden der Auswerteeinheit 5 zugeführt, welche beispielsweise als Microcontroller ausgebildet ist.

In der Auswerteeinheit 5 werden die analogen Empfangssignale beispielsweise mittels einer Schwellwerteinheit in eine binäre Signalfolge gewandelt. Zur Erkennung eines Barcodes 2 wird diese Signalfolge mit einer dem Kontrastmuster des Barcodes 2 entsprechende, in der Auswerteeinheit 5 abgespeicherten Signalfolge verglichen.

Der Sender 6 kann prinzipiell von einer Leuchtdiode gebildet sein. In einer besonders vorteilhaften Ausführungsform der Erfindung ist der Sender 6 von einer Laserdiode gebildet.

Erfindungsgemäß emittiert der Sender 6 Sendelichtstrahlen 8, deren Wellenlängen $\lambda$ in einem Bereich $350 \leq \lambda \leq 450$ nm liegen. Damit emittiert der Sender 6 Sendelichtstrahlen 8 im sichtbaren blauen und/oder im nahen Ultraviolettbereich. Im vorliegenden Ausführungsbeispiel wird als Sender 6 eine Laserdiode verwendet, welche Sendelichtstrahlen 8 bei einer Zentralwellenlänge von 405 nm emittiert.

Der Strahldurchmesser der Sendelichtstrahlen 8, insbesondere innerhalb des Tiefenschärfebereichs, beträgt maximal 660 µm.

Mit der optoelektronischen Vorrichtung 1 sind Barcodes 2 erfassbar, die in einer Distanz d bis zu 1,5 m zur Vorrichtung angeordnet sind. Dabei liegen die Modulbreiten B der Linienelemente 2a, 2b der Barcodes 2 vorzugsweise in einem Bereich von 0,1 mm $\leq$ B $\leq$ 0,4 mm.

Die Fläche $A_e$ der Empfangsoptik 15 beträgt maximal 5 cm$^2$. Dabei weist die Empfangsoptik 15 vorzugsweise einen kreisförmigen Querschnitt auf.

Die Flächen der Spiegelflächen 11 des Polygonspiegelrads 10 sind an die Fläche der Empfangsoptik 15 angepasst. Vorzugsweise sind die Flächen der Spiegelflächen 11 des Polygonspiegelrads 10 geringfügig kleiner als die Fläche der Empfangsoptik 15. In jedem Fall ist gewährleistet, dass wenigstens nahezu die gesamte Lichtmenge der Empfangslichtstrahlen 12 über die Spiegelflächen 1 und über die Empfangsoptik 15 zum Empfänger geführt ist.

Somit bestimmt die Größe der Empfangsoptik 15 die Größe der Spiegelflächen 11 des Polygonspiegelrades 10 und damit des gesamten Polygonspiegelrades 10. Da das Polygonspiegelrad 10 aufgrund seines relativ großen Volumens die Größe des nicht dargestellten Gehäuses, in welchem die optoelektronische Vorrichtung 1 integriert ist, im wesentlichen bestimmt, kann durch die erfindungsgemäß geringe Dimensionierung der Fläche der Empfangsoptik 15 die gesamte Baugröße der optoelektronischen Vorrichtung 1 erheblich reduziert werden.

Die Reduktion der Fläche der Empfangsoptik 15 führt dabei zu keiner Beeinträchtigung der Nachweisempfindlichkeit der optoelektronischen Vorrichtung 1, da ein im ultravioletten und/oder blauen Wellenlängenbereich emittierender Sender 6 verwendet wird. Insbesondere wird eine gegenüber mit im sichtbaren Bereich emittierenden Sendern 6 arbeitenden herkömmlichen Vorrichtungen ein wenigstens gleich großes oder vorzugsweise größeres Signalrauschverhältnis bezüglich des Speckle-Rauschens erhalten. Dieses Speckle-Rauschen bildet bei den mit der erfindungsgemäßen Vorrichtung erzielbaren großen Lesedistanzen im Bereich bis d = 1,5 m den dominanten Rauschanteil.

## Patentansprüche

1. Optoelektronische Vorrichtung zum Erkennen von mit definierten Kontrastmustern versehenen Marken mit einem Sendelichtstrahlen emittierenden Sender, einer dem Sender nachgeordneten Sendeoptik, einem Empfangslichtstrahlen empfangenden Empfänger, einer dem Empfänger nachgeordneten Empfangsoptik, einer Auswerteeinheit, und mit einer Ablenkeinheit, mittels derer die Sendelichtstrahlenperiodisch innerhalb eines Abtastbereichs abgelenkt und über die Marken geführt sind, dabei diesen reflektiert werden und als Empfangslichtstrahlen zum Empfänger geführt sind, und wobei die dabei am Ausgang des Empfängers generierten Empfangssignale zum Erkennen der Marken in der Auswerteeinheit ausgewertet werden, **dadurch gekennzeichnet, dass** diese eine maximale Lesedistanz von d = 1,5 m aufweist, dass die Wellenlängen $\lambda$ der vom Sender (6) emittierten Sendelichtstrahlen (8) im Bereich 350 nm $\leq \lambda \leq$ 450 nm liegen, und dass die Fläche $A_e$ der Empfangsoptik (15) kleiner oder gleich 5 cm$^2$ ist.

2. Optoelektronische Vorrichtung nach Anspruch 1, **dadurch gekennzeichnet, dass** der Sender (6) von einer Laserdiode gebildet ist.

3. Optoelektronische Vorrichtung nach einem der Ansprüche 1 oder 2, **dadurch gekennzeichnet, dass** diese einen Tiefenschärfebereich aufweist, innerhalb dessen der Strahldurchmesser der Sendelichtstrahlen (8) innerhalb des Tiefenschärfebereichs maximal 660 $\mu$m beträgt.

4. Optoelektronische Vorrichtung nach einem der Ansprüche 1 - 3, **dadurch gekennzeichnet, dass** die Ablenkeinheit ein rotierendes Polygonspiegelrad (10) aufweist, an dessen Spiegelflächen (11) die Sende- und Empfangslichtstrahlen (8, 12) reflektiert werden.

5. Optoelektronische Vorrichtung nach Anspruch 4, **dadurch gekennzeichnet, dass** die Baugröße des Polygonspiegelrads (10) an den Durchmesser der Empfangsoptik (15) angepasst ist.

6. Optoelektronische Vorrichtung nach Anspruch 5, **dadurch gekennzeichnet, dass** diese in einem Gehäuse angeordnet ist, dessen Abmessungen an die Größe des Polygonspiegelrads (10) und den Durchmesser der Empfangsoptik (15) angepasst sind.

## Claims

1. Opto-electronic device for recognising marks, which are provided with defined contrast patterns, comprising a transmitter emitting transmitted light beams, a transmitting optical system arranged downstream of the transmitter, a receiver receiving received light beams, a receiving optical system arranged downstream of the receiver, an evaluating unit and a defecting unit, by means of which the transmitted light beams are periodically defected within a scanning region and guided over the marks, in that case reflected at these and guided as received light beams to the receiver, and wherein the received signals then generated at the output of the receiver are evaluated in the evaluating unit for recognition of the marks, **characterised in that** these have a maximum reading distance of d = 1.5 m, that the wavelengths $\lambda$ of the transmitted light beams (8) emitted by the transmitter (6) lie in the region of 350 nm $\leq \lambda \leq$ 450 nm, and that the area $A_e$ of the receiving optical system (15) is smaller than or equal to 5 cm$^2$.

2. Opto-electronic device according to claim 1, **characterised in that** the transmitter (6) is formed by a laser diode.

3. Opto-electronic device according to one of claims 1 and 2, **characterised in that** this has a depth of field range within which the beam diameter of the transmitted light beams (8) within the depth of field range amounts to at most 660 $\mu$m.

4. Opto-electronic device according to one of claims 1 to 3, **characterised in that** the deflecting unit comprises a rotating polygon reflecting wheel (10), at the reflecting surfaces (11) of which the transmitted and received light beams (8, 12) are reflected.

5. Opto-electronic device according to claim 4, **characterised in that** the constructional size of the polygon reflecting wheel (10) is matched to the diameter of the receiving optical system (15).

6. Opto-electronic device according to claim 5, **characterised in that** this is arranged in a housing, the dimensions of which are matched to the size of the polygon reflecting wheel (10) and the diameter of the receiving optical system (15).

## Revendications

1. Dispositif optoélectronique pour la reconnaissance de marques munies de motifs contrastés définis, avec un émetteur émettant des rayons lumineux d'émission, une optique d'émission placée après l'émetteur, un récepteur recevant des rayons lumineux de réception, une optique de réception placée après le récepteur, une unité d'évaluation, et avec une unité de déviation au moyen de laquelle les rayons lumineux d'émission sont périodiquement déviés à l'intérieur d'une zone d'analyse et guidés sur les marques, sont réfléchis sur ou par celles-ci et reviennent au récepteur en tant que rayons lumineux de réception, et dans lequel les signaux de réception générés à la sortie du récepteur sont évalués dans l'unité d'évaluation en vue de la reconnaissance des marques, **caractérisé par le fait que** ledit dispositif présente une distance de lecture maximale de d = 1,5 m, que les longueurs d'onde $\lambda$ des rayons lumineux d'émission (8) émis par l'émetteur (6) se situent dans la gamme 350 nm $\leq \lambda \leq$ 450 nm et que la surface $A_e$ de l'optique de réception (15) est inférieure ou égale à 5 cm$^2$.

2. Dispositif optoélectronique selon la revendication 1, **caractérisé par le fait que** l'émetteur (6) est formé d'une diode laser.

3. Dispositif optoélectronique selon l'une des revendications 1 ou 2, **caractérisé par le fait que** celui-ci présente une plage de profondeur de champ à l'intérieur de laquelle le diamètre des rayons lumineux d'émission (8) ne dépasse pas 600 $\mu$m à l'intérieur de la plage de profondeur de champ.

4. Dispositif optoélectronique selon l'une des revendications 1 à 3, **caractérisé par le fait que** l'unité de déviation présente un tambour à miroirs polygonal tournant (10), sur les surfaces réfléchissantes (11) duquel les rayons lumineux d'émission et de réception (8, 12) sont réfléchis.

5. Dispositif optoélectronique selon la revendication 4, **caractérisé par le fait que** la taille du tambour à miroirs polygonal (10) est adaptée au diamètre de l'optique de réception (15).

6. Dispositif optoélectronique selon la revendication 5, **caractérisé par le fait que** celui-ci est placé dans un boîtier dont les dimensions sont adaptées à la taille du tambour à miroirs polygonal (10) et au diamètre de l'optique de réception (15).

# Fig. 1